# EUROPEAN PATENT APPLICATION

(11) **EP 1 209 561 A2**
(43) Date of publication of application: **29.05.2002**
(21) Application number: 01309682.1
(22) Date of filing: 16.11.2001
(51) Int. Cl.: G06F 9/44

(54) **HTML-based downloadable look and feel**

(30) Priority: 21.11.2000 US 718532
(71) Applicant: Hewlett-Packard Company, Palo Alto, CA 94304 (US)
(72) Inventor: Barmettler, James W., Corvallis, OR 97330 (US)
(74) Representative: Jackson, Richard Eric

(57) **Abstract**

The present invention provides a method and computer medium 302 for automatically providing a desired look and feel for a downloadable program. The method includes the steps of: selecting 202, by a user, components of a desired program to change the look and feel of downloadable content to a particular desired configuration; collecting 204, by a service provider, skin programs defined by content providers; and automatically modifying and downloading 206, as the user selects the downloadable content from each of the content providers, at least part of the skin programs defined by the content provider and collected by the service provider in accordance with the components of the desired program selected by the user.

## Description

### FIELD OF THE INVENTION

The present invention relates generally to formatting software applications. More particularly, the present invention relates to graphical user interfaces.

### BACKGROUND OF THE INVENTION

Companies spend millions of dollars each year developing software programs. Graphical user interfaces (GUIs) are provided as program interfaces that utilize a computer's graphics capabilities to facilitate use of the software programs. GUIs typically use a pointer, a pointing device, icons, a desktop, windows and pull-down menus to enable the user to interact with the software program visually. Alternatively, command language can be used to drive the interface.

The pointer is a symbol on the display screen of the computer and may be moved to select objects and commands. Generally, a mouse, touch-screen, pointing controller or trackball may be used as a pointing device. Icons are small pictures on the screen that may be used to represent commands, files or windows. Icons may be moved around the screen, or clicked on to open files or windows. The desktop is the screen area on the display. Different windows may be used to display different files or to run different programs. Typically, the size of the windows may be adjustable. The pull-down menus typically may be pulled down by clicking on the main title for the menu. Then, a selection may be made from the items in the menu. Though graphical user interfaces were developed by Xerox® in the 1970s, the first commercial graphical user interface, Xerox's Star® workstation, was not introduced until 1981. GUIs allow interfaces to use symbols to represent working tools, allowing users to interact comfortably with the software programs without having to memorize a command language. GUIs which share standard formats for representing text and graphics may also be used to move data from one application to another. For example, a GUI may be used to copy a graph or table from a spreadsheet program into a textual document that has been created using a word processor.

The appearance and behavior of a complete set of GUI components is known as the "look and feel". In order to have clear, consistent, compatible and easy-to-use software programs, if the "look and feel" is the same, development of the software as well as the cost of training users to utilize it are minimized. While web sites are easy to customize, software applications on the other hand offer very limited customization without doing a reinstall. Unlike a web site, the look and feel of a software application is usually defined locally so that the application can be used while the user is not connected to a remote computer. Currently, downloaded applications teach replacement of graphics and sounds on a one-by-one replacement basis. Thus, there is a need for a method and computer medium for simultaneously downloading graphics, sound files, a program for automatically adjusting the look and feel of a downloadable application and a format with scripting language to provide a "look and feel" that facilitates user flexibility in adjusting the look and feel.

### SUMMARY OF THE INVENTION

The present invention provides a method for automatically providing a desired look and feel for a downloadable program. First, the user selects components of a desired program to change the look and feel of downloadable content to a particular desired configuration. Then,
Upon collecting, by a service provider, skin programs defined by content providers, at least part of the skin programs defined by the content provider and collected by the service provider are automatically modified and downloaded as the user selects the downloadable content from each of the content providers, in accordance with the components of the desired program selected by the user. The downloadable program may be a HyperText Markup Language document. The components of the desired program may include scripting language elements such as, for example, JavaScript®. Typically, the downloadable program includes at least graphics or sound files.

A computer medium with programs for implementing the steps of the invention is also described.

### BRIEF DESCRIPTION OF THE DRAWINGS

The foregoing summary of the invention, as well as the following detailed description of preferred embodiments, is better understood when read in conjunction with the accompanying drawings, which are included by way of example, and not by way of limitation with regard to the claimed invention.
Figures 1(a)-(b) illustrate one embodiment of: 1(a) a first downloaded application; and 1(b) a transformation of the first downloaded application into a desired look and feel preselected by a user.
Figure 2 is a flow chart showing one embodiment of steps of implementing the method of the present invention.
Figure 3 is a block diagram of a computer medium having programs with computer-executable steps for automatically providing a desired look and feel for downloadable content in accordance with the present invention.

### DETAILED DESCRIPTION OF THE PREFERRED EMBODIMENTS

The present invention enables automatic downloading of graphics and sound files software, and a skin-adjusting program as well. A "skin" is a program that is used to change the look and feel of a downloadable application to a particular desired configuration. The addition of, for example, HyperText Markup Language (HTML) and scripting allows almost limitless possibilities to changing the look and feel of an application.

In one embodiment, the application user interface is fully or in part defined with HTML scripts. The scripts are made available to the end-users with HTML controls embedded in the application. However, the HTML controls being utilized today do not create a downloadable look and feel. Although programming-like statements are being added to HTML, HTML is not a full-blown programming language like Java® or JavaScript®. HTML may be described more as a "presentation language". HTML is derived from the Standard Generalized Markup Language (SGML), which is widely used to publish documents. An HTML document is a SGML document that has a fixed set of tags that, although they change with each revision, are not flexible. Web browsers use TCP/IP protocol to communicate with web servers by sending HTTP requests to the web server, which sends HTML pages to the web browser.

HTML has the power and flexibility to allow complete programmatic customization of the look and feel of the application, as is clear from the use of HTML to define the entire Internet web user interface. HTML is not limited to the substitution of one graphic for another or one sound file for another. The size and relative position of the user interface components, user interaction effects such as mouse-over, click, right-click and the like, animation, multimedia effects such as fade-in, fade-out, swipe and the like, and sounds may be varied using HTML. None of these elements may be altered by one-for-one substitution of graphic and sound files. Programmatic control is obtained by java script or Visual Basic® (VB) Script.

Style definitions may be placed in HTML so that look and feel changes occur without changing the source code in the HTML file.

The end user may download a new look by downloading one or more HTML scripts that define all or part of the user interface. Scripts are lists of commands that may be executed without user interaction. Typically, the graphics, sound files, and HTML include files referenced in new HTML files that have to be downloaded with the HTML files. Scripting languages are high-level programming or command languages that are interpreted "on the fly" rather than being compiled ahead of time. Generally, scripting languages perform specific functions such as, for example, spreadsheet macros. In the present invention, when new scripts and files arrive on the user's computer, the application switches from the original scripts to the new scripts and refreshes its display. The new HTML can define an entirely different layout, new response to user actions, new multimedia effects and the like. Thus, a user may generate an automatic desired customized look and feel for his downloadable files.

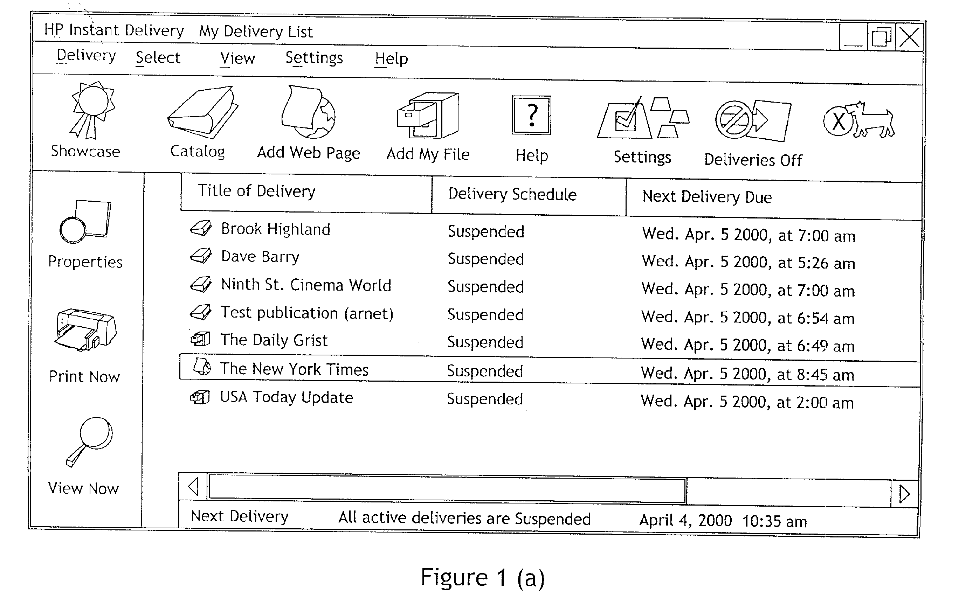

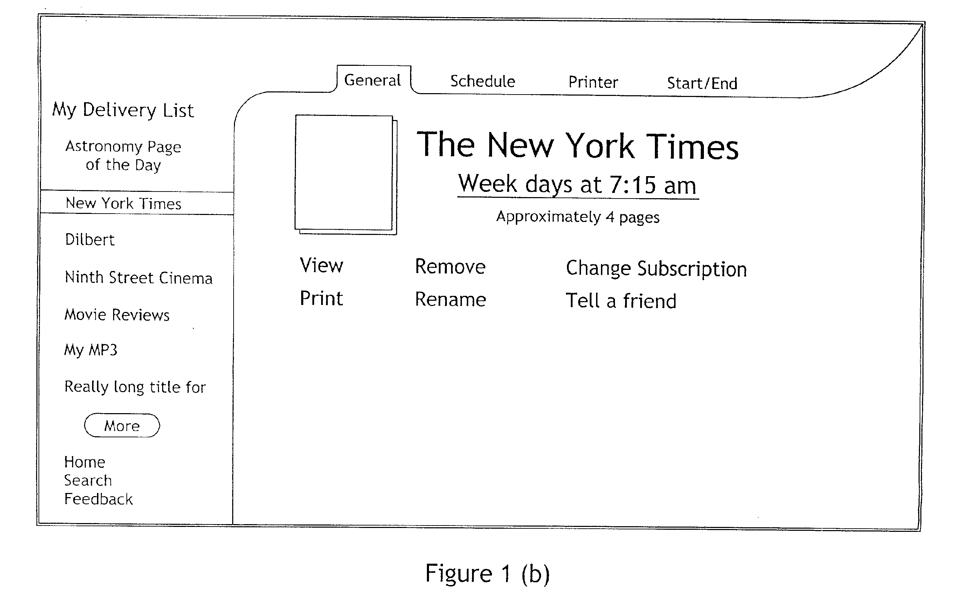

The prior art typically provides for one-to-one substitutions, i.e., for substituting one bitmap for another. Thus, the user has been able to change the look, but not the layout. User interface elements could not be added or removed. In one embodiment, the present invention utilizes HTML to change the user interface to a desired look, allowing for radical movement of, additions to, deletions from and other changes to user interface elements. The display of HTML may be easily accomplished in computer applications since Microsoft® built in an "HTML display control" into Win95B++®, Win98®, Windows CE 2.0®, and WinNT®. Insertion of JavaScript in HTML allows the user to change not only the look, but also how the program works since JavaScript allows the user to add programmatic capabilities to the downloaded look and feel. An example of a transformation of an application to an application having a desired look and feel is shown in Figures 1(a)-(b).

A service provider may collect the skins defined by the content provider and download them to the end user as the end user selects content form each of the content providers. By combining the user ability to select various skins with the ability to have the service provider collect the content provider's skins, the end user may modify part or all of a selected content provider's skin with one of the end user's choice or design.

In one embodiment, the user may utilize insertion of JavaScript® as the scripting language to modify a skin that is written in HTML to adjust the look and feel to his desired form. Downloading is simply transmission of a file over a network. Typically, files may be downloaded by clicking on a "Click here to download this file" message on a web page. However, with the present invention, JavaScript® allows the user to have the application react to what the user is doing as opposed to submitting a request and waiting for it to be fulfilled. For example, insertion of "onClick" and a desired message in the HTML document causes the desired message to be shown to the user when the user clicks on a link. Similarly, insertion of "onMouseOver" and the desired message in the HTML document causes the desired message to be shown when the user moves the cursor over the link. Using a browser that supports image replacement, insertion in the HTML document of lines reading:
<img src="button_r.gif" name="the image">
<a href="#"
onMouseOver="document.the_image.src='button_d.gif';">change</a> will cause the system to, upon the cursor being passed over 'the_image', replace 'the_image" with "button_d.gif". Inseition of "if-then-else" clauses may be used to make the JavaScript behave differently depending on the user actions.

Though opening windows in HTLM is convenient, it is also very limiting since the web browser utilized controls how the window looks. That is, the user has no control over the size of the window or how the window looks. JavaScript® allows the user to open a window with a URL which is listed as a first parameter of a method call, a second parameter which is the window's name and optionally, a third "features" parameter which is a list of the different components a window may have. A method is an action or processing that an object in an object-oriented programming document performs when the method is called. The "features" may include: a menubar for items such as File, Edit and the like; a status bar that, upon the cursor being moved over it, shows the URL; scrollbars; resizable, which allows the user to resize the window; width, which shows the width of the window in pixels; height which shows the height of the window in pixels; toolbar, which may list Back, Forward, Stop, Home and the like; location, which is a text area of a browser in which the user may type URLs; and directories, which may list sources believed to be of interest to users.

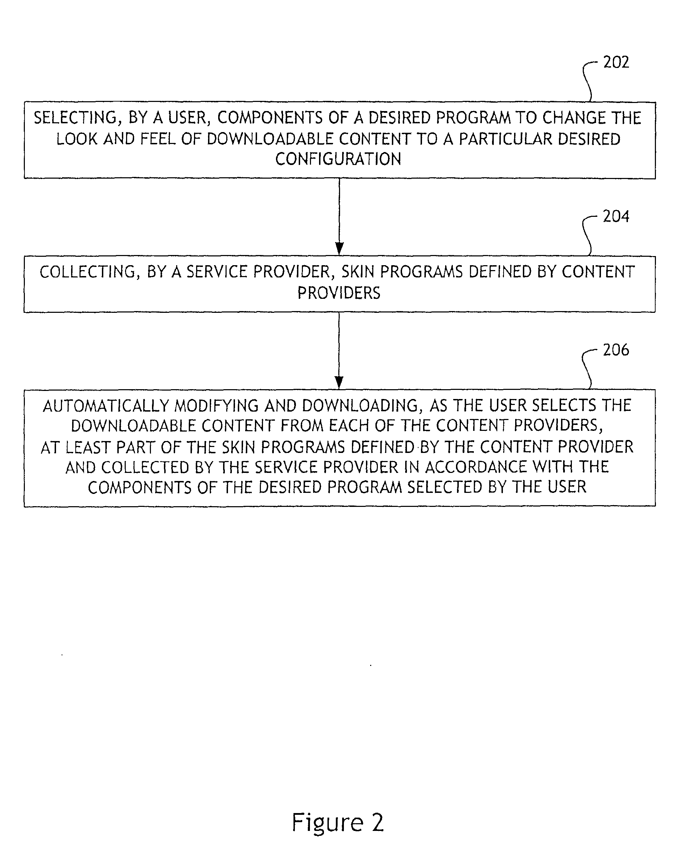

Figure 2 is a flow chart showing one embodiment of steps of implementing the method of the present invention. The steps include: selecting 202, by a user, components of a desired program to change the look and feel of downloadable content to a particular desired configuration; collecting 204, by a service provider, skin programs defined by content providers; and automatically modifying and downloading 206, as the user selects the downloadable content from each of the content providers, at least part of the skin programs defined by the content provider and collected by the service provider in accordance with the components of the desired program selected by the user. In one embodiment the downloadable content may be a HyperText Markup Language document. The desired program may include scripting language elements such as, for example, JavaScript®. A downloadable program generally includes at least graphics or sound files.

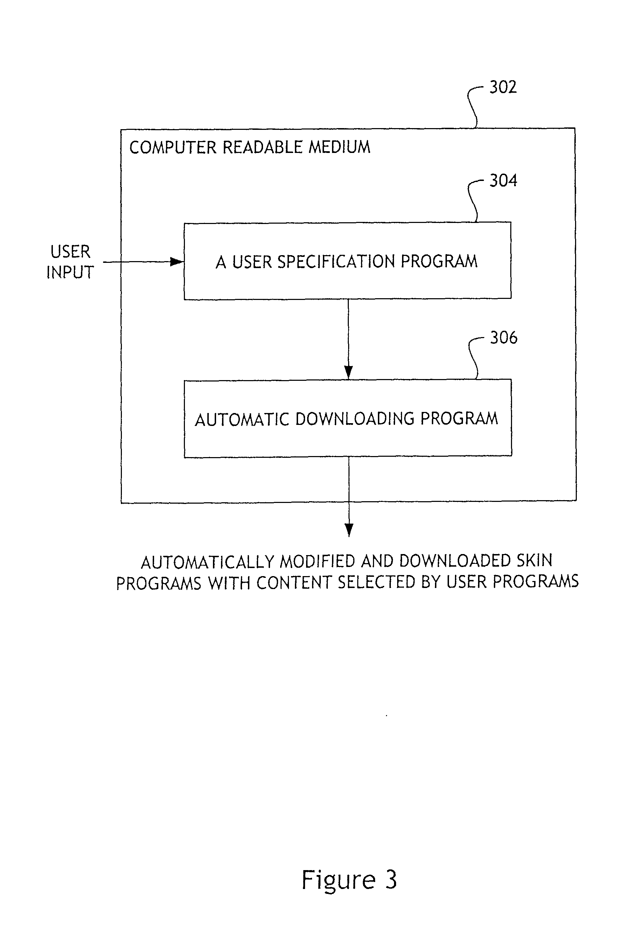

Figure 3 is a block diagram of a computer medium 302 having programs with computer-executable steps for automatically providing a desired look and feel for downloadable content in accordance with the present invention. The programs include a user specification program 304 and an automatic downloading program 306. The user specification program 304 provides for a user to utilize to select components for a desired skin with a desired look and feel for downloadable content by displaying components available on a computer display for user selection. Upon collecting, by a predetermined service provider, skin programs defined by predetermined content providers and selecting, by the user, of content from the preselected content providers, the automatic downloading program 306 automatically modifies and downloads at least part of the skin programs in accordance with the components selected for the desired skin by the user. In one embodiment, the downloadable content may include HyperText Markup Language. Where desired, the components of the desired program may include elements of a selected scripting language, e.g., JavaScript®. Typically, the downloadable content includes at least graphics or sound files.

Although the present invention has been described in relation to particular preferred embodiments thereof, many variations, equivalents, modifications and other uses will become apparent to those skilled in the art. It is preferred, therefore, that the present invention be limited not by the specific disclosure herein, but only by the appended claims.

## Claims

1. A method for automatically providing a desired look and feel for a downloadable program, comprising the steps of:
selecting 202, by a user, components of a desired program to change the look and feel of downloadable content to a particular desired configuration;
collecting 204, by a service provider, skin programs defined by content providers; and
automatically modifying and downloading 206, as the user selects the downloadable content from each of the content providers, at least part of the skin programs defined by the content provider and collected by the service provider in accordance with the components of the desired program selected by the user.

2. The method of claim 1 wherein the downloadable program is a HyperText Markup Language document.

3. The method of claim 1 wherein the components of the desired program include scripting language elements.

4. The method of claim 3 wherein the scripting language is JavaScript.

5. The method of claim 1 wherein the downloadable program includes at least one of: graphics and sound files.

6. A computer medium 302 having programs with computer-executable steps for automatically providing a desired look and feel for downloadable content, wherein the programs comprise:
a user specification program 304, for a user to utilize to select components for a desired skin with a desired look and feel for downloadable content; and
an automatic downloading program 306, for, upon collecting, by a predetermined service provider, skin programs defined by predetermined content providers and selecting, by the user, of content from the preselected content providers, automatically
modifying and downloading, at least part of the skin programs in accordance with the components of the desired skin selected by the user.

7. The computer medium of claim 6 wherein the downloadable content includes HyperText Markup Language.

8. The computer medium of claim 6 wherein the components of the desired program include elements of a selected scripting language.

9. The computer medium of claim 8 wherein the components are modifiable by scripting language, and where selected, the selected scripting language is JavaScript.

10. The computer medium of claim 6 wherein the downloadable content includes at least one of: graphics and sound files.
